# EUROPEAN PATENT SPECIFICATION

(11) **EP 2 233 871 B1**
(45) Date of publication and mention of the grant of the patent: **18.01.2012**
(21) Application number: 10250597.1
(22) Date of filing: 26.03.2010
(51) Int. Cl.: F27D 5/00, C04B 35/565, B28B 11/24

(54) **Method for firing Si-bonded SiC ceramics**
Verfahren zum Befeuern von Si-gebundener SiC-Keramik
Procédé de cuisson de céramiques SiC à liaison Si

(30) Priority: 27.03.2009 JP 2009078198
(43) Date of publication of application: 29.09.2010
(73) Proprietor: NGK Insulators, Ltd., Nagoya-city, Aichi 467-8530 (JP)
(72) Inventor: Kamei, Yoshiyuki, Nagoya City Aichi-ken, 467-8530 (JP); Okada, Koichi, 44-109 Gliwice (PL)
(74) Representative: Paget, Hugh Charles Edward

(56) References cited:
- JP-A- 2007 254 237

## Description

### Background of the Invention and Related Art Statement

The present invention relates to a method for firing Si-bonded SiC ceramics, the method being suitable for a catalyst carrier in an internal combustion engine, a boiler, or the like or for a honeycomb structure used as a filter for trapping particulate matter in exhaust gas.

A Si-bonded SiC material (Si-SiC) containing silicon carbide particles bonded by metal silicon has excellent thermal resistance, thermal shock resistance, and oxidation resistance and is known as a typical constituent material for a catalyst carrier utilizing catalysis in an internal combustion engine, a boiler, or the like; or for a honeycomb structure used as a filter for trapping particulate matter in exhaust gas, in particular, diesel particulate matter.

As a general manufacturing method of such Si-bonded SiC ceramics, there has been known a method where kneaded clay obtained by adding a silicon carbide powder material and the like to a metal silicon powder and an organic binder, followed by mixing and, as necessary, kneading is formed into a predetermined shape to obtain formed articles; disposing the formed articles in a sagger; calcining the formed article to remove the organic binder and the like in the formed articles; and then subjecting the calcined formed articles to main firing.

In the aforementioned manufacturing method, it is desirable that, upon calcination, the sagger where the formed articles are disposed has an open structure in order to improve internal ventilation and accelerate decomposition of organic matter and that, upon main firing, the sagger has little open structure in order to maintain a fixed inert atmosphere inside the sagger. That is, by right, saggers having conflicting structures suits for them. In the case of performing the calcination and the main firing in continuous steps, for convenience of the production process, the same sagger having one groove or a plurality of grooves is used.

At this time, the groove formed in the sagger is effective to release combustion gas of the organic binder and the like removed from the formed articles upon calcination outside the sagger. In the main firing where the atmosphere in the furnace is adjusted to an inert atmosphere such as an Ar atmosphere, such a groove allows a steam component derived from metal silicon in the formed articles to move through the groove, thereby changing the atmosphere in the sagger. Depending on the position where the formed articles are disposed in the sagger, there is caused a problem that the formed articles are influenced by the change of the atmosphere.

In order to solve such a quality problem, there is taken a measure to provide a lid or an enclosure of the same material as or different material from that for the sagger or the same material as that for objects to be fired (products) or a measure to use the object to be fired located in the outermost side (position close to the inner peripheral face of the sagger) not as the product, but as the enclosure described above. However, such a measure of providing a lid or an enclosure results in reduction in the load amount of the products by disposing the member other than the products in the sagger. This deteriorates the production efficiency and requires an extra material for the member, thereby deteriorating the production yield. Such new problems arise.

In addition, in this method, though the atmosphere in the sagger is kept fixed, in the atmosphere inside the furnace upon the main firing where oxygen is rare such as an Ar atmosphere, SiC and Si contained in the formed articles or the like form SiO to scatter outside the sagger, and, at the same time, alkali components such as Na₂O and K₂O contained in the formed articles or the like also scatter outside the sagger. Therefore, these SiO or alkali components aggregate as a glass phase in a low-temperature portion in the furnace to cause a problem of increasing a mending frequency of a refractory brick constituting the inner wall of the furnace of the low-temperature portion.

In order to solve the problem of the aforementioned deterioration of an inner wall of the furnace, for example, JP-A-2007-254237 discloses a method for manufacturing each Si nonoxide ceramic article, where a ceramic solid containing SiO₂ and Al₂O₃ as the main components is disposed in a sagger and fired, to successfully prolong the life of the furnace by allowing the ceramic solid to adsorb the scattering SiO and alkali components. However, regarding the production efficiency and the yield of the products, it still has problems.

### Summary of the Invention

The present invention has been made in view of the prior art problems described above and aims to provide a method for firing Si-bonded SiC ceramics capable of dealing with both the calcination and the main firing without disposing a member such as a lid or an enclosure in the sagger to be able to improve the production efficiency and the yield of the products and reduce the mending frequency of the furnace.

In order to achieve the above aim, according to the present invention, there is provided the following method for firing Si-bonded SiC ceramics.

[1] A method for firing Si-bonded SiC ceramics comprising the steps of: forming kneaded clay obtained by adding a silicon carbide powder to a raw material containing metal silicon and an organic binder into a predetermined shape to obtain formed articles, disposing the formed articles in a sagger having grooves formed therein, introducing a plurality of refractory containers each carrying a plurality of saggers into a firing furnace in a state that the refractory containers are arranged in parallel with one and another, calcining the formed articles to remove organic matter in the formed articles, and subjecting the formed articles to main firing in an inert gas atmosphere; wherein the grooves are formed only in a pair of frame plates facing each other and constituting side faces of each of the saggers, the saggers are disposed so that a groove-formed frame plate being the grooves of each sagger faces the groove-formed frame plate of the sagger adjacent in a depth direction of the firing furnace with each of the groove-formed frame plate being in parallel with a width direction of the firing furnace in at least the main firing of the calcination and the main firing, and the refractory containers carrying the saggers are introduced in the firing furnace to perform firing in the state that the refractory containers are arranged in parallel with maintaining an interval enough to avoid contact.

[2] The method for firing Si-bonded SiC ceramics according to [1], wherein the inert gas atmosphere is an Ar atmosphere.

[3] The method for firing Si-bonded SiC ceramics according to [1] or [2], wherein the formed articles are disposed by being positioned so that the direction where the groove-formed frame plates face each other coincides with the longitudinal direction of the formed articles.

[4] The method for firing Si-bonded SiC ceramics according to any one of [1] to [3], wherein the groove is formed in an upper end portion and a lower end portion of the frame plate by providing notches bilaterally symmetrically.

[5] The method for firing Si-bonded SiC ceramics according to [4], wherein a pair of the grooves formed in each the upper end portion and the lower end portion of the frame plate are formed so that the distance between the grooves increases from the inside toward the outside of the frame plate.

[6] The method for firing Si-bonded SiC ceramics according to any one of [1] to [5], wherein an open ratio of the sagger, which is a proportion of an open area of the grooves in the inner surface area of the frame member composed of the frame plates having four faces and constituting whole side faces of the sagger, is 1 to 15%.

[7] The method for firing Si-bonded SiC ceramics according to any one of [1] to [6], wherein, in the calcination, the saggers are disposed so that a sealing frame plate, which is the frame plate having no groove formed therein, of each of the saggers faces the sealing frame plate of the sagger adjacent in the depth direction of the firing furnace and that the groove-formed frame plates of each of the saggers are perpendicular to the width direction of the firing furnace, and the refractory containers each carrying the saggers are introduced in the firing furnace to perform firing in the state that the refractory containers are arranged in parallel with maintaining an interval enough to avoid contact.

[8] The method for firing Si-bonded SiC ceramics according to any one of [1] to [7], wherein the Si-bonded SiC ceramics are honeycomb structures.

[9] The method for firing Si-bonded SiC ceramics according to any one of [1] to [8], wherein the Si-bonded SiC ceramics are plugged honeycomb structures where adj acent cells are plugged in mutually opposite end portions.

[10] The method for firing Si-bonded SiC ceramics according to any one of [1] to [9], wherein the calcination and the main firing are performed by the use of a continuous tunnel furnace whose internal temperature distribution is controlled.

According to the present invention, in firing of Si-bonded SiC ceramics where formed articles are disposed in a sagger having grooves formed therein to perform the calcination and the main firing, the yield and the production efficiency of the products can be improved in comparison with a conventional f iring method. In addition, it can suppress scattering of SiO and alkali components outside the sagger to inhibit deterioration of a refractory brick due to aggregation of scattering SiO and alkali components as a glass phase in a low-temperature portion in the furnace. As a result, a mending frequency of the furnace can be reduced.

### Brief Description of the Drawings

[Fig. 1A] Fig. 1A is a schematic plan view from the top of an embodiment of disposition upon main firing and/or calcination of a sagger used in a firing method of the present invention.

[Fig. 1B] Fig. 1B is a schematic plan view from the top of an embodiment of disposition upon calcining of a sagger used in a firing method of the present invention.

[Fig. 2] Fig. 2 is a schematic perspective view showing appearance where apluralityof embodiments of saggers used in a firing method of the present invention are piled up.

[Fig. 3] Fig. 3 is a schematic plan view from the top of an embodiment of a structure of the firing furnace used in a firing method of the present invention.

[Fig. 4] Fig. 4 is a schematic plan view from the top of the appearance where formed articles are disposed in one embodiment of a sagger used in the firing method of the present invention.

[Fig. 5] Fig. 5 is a schematic perspective view from the oblique top of an embodiment of a frame member of a sagger used in a firing method of the present invention.

[Fig. 6] Fig. 6 is a schematic plan view from a side face where grooves are formed.

### Reference Numerals

1: formed article, 2: sagger, 3: floor plate, 4: lid plate, 5: frame plate, 5a: groove-formed frame plate, 5b: sealing frame plate, 6: groove, 7: inner wall of furnace, 8 : firing furnace, 8a: organic matter-firing furnace, 8b: substrate firing furnace, 9: frame member

### Detailed Description of the Invention

Hereinbelow, embodiments of the present invention will be described with referring to drawings. The present invention is not limited to the following embodiments, and changes, modifications, and improvements may suitably be added as long as they do not deviate from the scope of the present invention.

As described above, a firing method of the present invention comprises the steps of: forming kneaded clay obtained by adding a silicon carbide powder to a raw material containing metal silicon and an organic binder into a predetermined shape to obtain formed articles, dispose the formed articles in a sagger having a groove formed therein, introducing a plurality of refractory containers each carrying a plurality of saggers into a firing furnace in a state that the refractory containers are arranged in parallel with one another, calcining the formed articles to remove organic matter in the formed articles, and subjecting the formed articles to main firing in an inert gas atmosphere. As the characteristic constitution, the grooves are formed only in a pair of frame plates facing each other and constituting side faces of the sagger, the saggers are disposed so that a groove-formed frame plate having the grooves of the sagger faces the groove-formed frame plate of the sagger adjacent in a depth direction of the firing furnace with each of the groove-formed frame plate being in parallel with a width direction of the firing furnace in at least the main firing of the calcination and the main firing, and the refractory containers carrying the saggers are introduced in the firing furnace to perform firing in the state that the refractory containers are arranged in parallel with maintaining an interval enough to avoid contact.

The raw material used for the present invention contains metal silicon and an organic binder. By further adding a silicon carbide powder, a raw material of Si-bonded SiC ceramics can be obtained. In addition, according to the material, characteristics, and the like of the ceramics to be obtained, there may suitably be added a pore former, alkali earth metal, and the like. Though the average particle diameter of the silicon carbide powder to be added is not particularly limited, it is preferably 2 to 4 times the average pore diameter of the Si-bonded SiC ceramics finally obtained by a firing method of the present invention.

In addition, the metal silicon contained in the raw material plays a role of bonding silicon carbide particles together by melting during the main firing and moistening the surfaces of the silicon carbide particles. In this case, though the suitable amount of the metal silicon in the raw material changes depending on the particle diameter and the particle shape of the silicon carbide powder raw material, it is preferably 5 to 50 mass% with respect to the total amount of the silicon carbide powder and the metal silicon, for example. In addition, the average particle diameter of the metal silicon at this time is preferably 50% or less with respect to the average particle diameter of the silicon carbide powder raw material, for example.

The organic binder is added in order to ease the formation of the formed articles. The amount of the organic binder is preferably 2 mass% or more as superaddition with respect to the total amount of the other raw materials, for example. However, addition of above 30 mass% is not preferable because it causes extremely high porosity after calcination, which leads to insufficient strength. The kind of the organic binder used is not particularly limited. However, specifically, there may be employed hydroxypropylmethyl cellulose, methyl cellulose, hydroxyethyl cellulose, carboxylmethyl cellulose, or polyvinyl alcohol.

In addition, in the case of trying to use Si-bonded SiC ceramics obtained by a firing method of the present invention as a filter for trapping particulate matter in exhaust gas, a pore former is added upon preparing kneaded clay for the purpose of increasing the porosity. The amount of the pore former is preferably 30 mass% or less as superaddition with respect to the total amount of the other raw materials, for example. There is no particular limitation of the pore former used. Specifically, there may be employed graphite, a resin balloon, a foamed resin balloon, flour, starch, phenol resin, methyl polymethacrylate, polyethylene, polymethacrylate, and polyethylene telephthalate. These pore former may be used alone or as a combination of two or more kinds.

An alkali earth metal may be added upon preparing kneaded clay for the purpose of increasing wettability of the metal silicate upon firing. The addition amount of the alkali earth metal is preferably 5 mass% or less as superaddition with respect to the other raw materials, for example. Though there is no particular limitation on the kind of the alkali earth metal used, specifically, calcium, strontium, or the like may be employed.

The kneaded clay obtained by mixing the raw materials described above together by an ordinary method and further kneading the mixture as necessary is formed into a desired shape by an extrusion forming method or the like. Next, the formed articles obtained above are disposed in a sagger having grooves formed therein for gas circulation and calcined to remove the organic matter in the formed articles. Incidentally, in the present invention, "calcination" means an operation of combusting and removing the organic matter (organic binder, pore former, and the like) in the formed articles and is sometimes referred to as "degreasing" or "binder removal". Generally, the combustion temperature of the organic binder is about 100 to 300°C, and the combustion temperature of the pore former is about 200 to 400°C. Therefore, the calcination temperature may be about 400 to 500°C at highest.

After the organic binder and the like is removed by calcination, the main firing is performed. Incidentally, in the present invention, the "main firing" means an operation of sintering the forming raw material in the formed articles (calcined articles) after calcination for densification in order to secure predetermined strength. Suitable firing conditions (temperature and time) are different depending on the kind of the forming raw material. However, the firing temperature upon the main firing in the present invention is preferably 1400 to 1600°C, more preferably 1400 to 1500°C. Since the melting point of the metal silicon is 1410°C, when the firing temperature is below 1400°C, the structure where the silicon carbide particles are bonded with the metal silicon cannot be obtained, and it may be impossible to manufacture an aimed sintered article. When the firing temperature is above 1600°C, metal silicon may be evaporated and scatter.

The firing time in the main firing is preferably about 1 to 10 hours. In addition, the main firing is performed in an inert atmosphere in the furnace. In a method for firing Si-bonded SiC ceramics of the present invention, the main firing is preferably performed in an Ar atmosphere.

The calcining and main firing are performed by disposing formed articles in a plurality of saggers having grooves formed therein for gas circulation, superposing the saggers in a refractory container, and introducing the refractory container into a firing furnace. At this time, the grooves are formed only in a pair of frame plates facing each other and constituting side faces of the sagger. In the firing, the saggers are disposed so that a groove-formed frame plate having grooves of the sagger faces the groove-formed frame plate of the sagger adjacent in a depth direction of the firing furnace with each of the groove-formed frame plate being in parallel with a width direction of the firing furnace in at least the main firing of the calcination and the main firing. That is, the saggers are disposed in such a manner that the groove-formed frame plates are in parallel with the width direction of the firing furnace. Incidentally, in the present invention, the "frame plate" means each of the quadrangle plate members constituting four side faces of each of the saggers, and the "frame member" means a member composed of four frame plates and constituting the whole side faces of each of the saggers. In addition, the "groove-formed frame plates" mean the frame plates having grooves formed therein and mutually facing each other among the four side faces of each of the saggers, and the "sealing frame plates" mean the frame plates having no groove and facing each other among the four side faces of each of the saggers. Further, the "depth direction of the firing furnace" in the present invention means the introduction direction of the sagger in the firing furnace, the direction connecting the inlet port and the outlet port of the furnace, in particular, in a continuous tunnel furnace, and the conveyance direction upon conveyance of the saggers from the inlet port to the outlet port of the furnace. In addition, the "width direction of the firing furnace" means the direction perpendicular to the depth direction of the firing furnace.

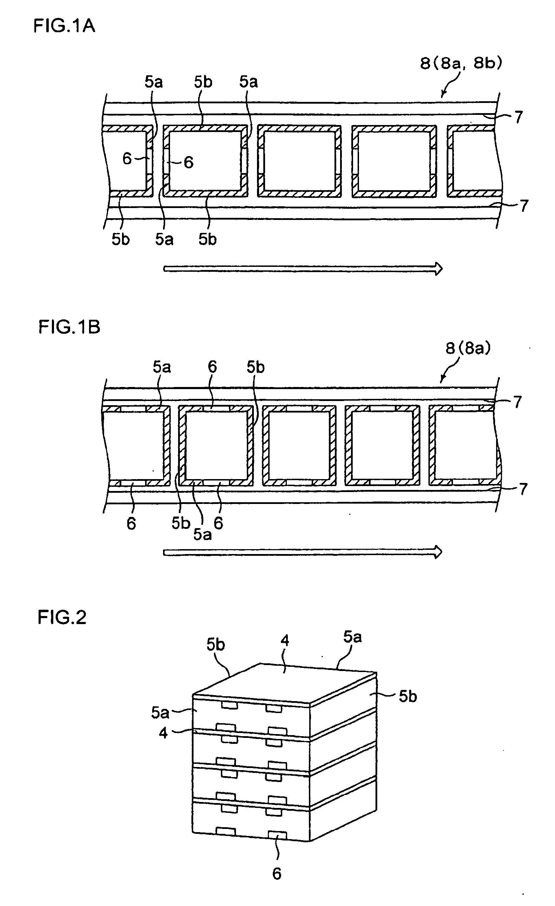

Fig. 1A is a schematic plan view from the top of an embodiment of disposition upon main firing and/or calcination of a sagger used in a firing method of the present invention, and Fig. 2 is a schematic perspective view showing appearance where a plurality of embodiments of saggers used in a firing method of the present invention are piled up. Fig. 1A shows an embodiment in a tunnel furnace. Since the refractory containers each carrying the saggers 2 continuously move one after another through the furnace in the tunnel furnace, the saggers are adjacent to other saggers in front and at the back thereof in the flow direction (depth direction of the firing furnace). Therefore, grooves 6 are provided in the frame plates 5 on the sides where they are adjacent to another frame plate, and the frame plates 5 on the sides where they are not adjacent to another frame plate 5 are sealed. That is, in a firing methodof the present invention, the groove-formed frame plates 5 having grooves 6 formed therein face the adjacent saggers lest the open portions should face the inner wall 7 of the furnace as in, for example, Fig. 1A.

Unlike the calcination requiring good ventilation in the saggers 2 in order to accelerate oxidation, it is necessary to keep the atmosphere in the saggers 2 fixed upon the main firing. That is, by right, in the main firing, it is preferable to use the saggers 2 having a structure incompatible with that of the saggers 2 in the calcination. However, by employing the aforementioned disposition of the saggers 2, while employing saggers 2 having grooves 6, the atmosphere in the saggers 2 can be kept fixed without using a member such as a lid or an enclosure which has conventionally been disposed around the open portion of the saggers 2, which enables to stabilize quality of the final product and improve the yield.

When the main firing is performed in an inert atmosphere having rare oxygen such as an Ar atmosphere, SiC and Si in the formed articles 1 form SiO, which scatters from the formed article 1, and, at the same time, alkali components such as Na₂O and K₂O are evaporated and scatter from the formed articles 1. Conventionally, there has been caused a problem that SiO and alkali components scattering outside the saggers 2 aggregate as a glass phase in a low temperature portion in the furnace to increase a mending frequency of the refractory brick constituting the inner wall of the furnace in the low temperature portion. However, by employing the structure and the disposition of the saggers 2 of the present invention, occurrence of the aforementioned problem is inhibited, and the mending frequency of the furnace can be reduced.

On the other hand, in the structure and the disposition of the saggers 2 shown in Fig. 1A, since no lid or enclosure is disposed in the saggers 2, even in the case of employing them upon calcination, ventilation sufficient for oxidation acceleration can be secured, and the binder can be decomposed without delay. That is, the structure and the disposition of the saggers 2 described above can deal with both the calcination and the main firing with no requirement of disposing a member such as a lid or an enclosure in each of the saggers 2 to be able to improve the yield and the production efficiency of the products.

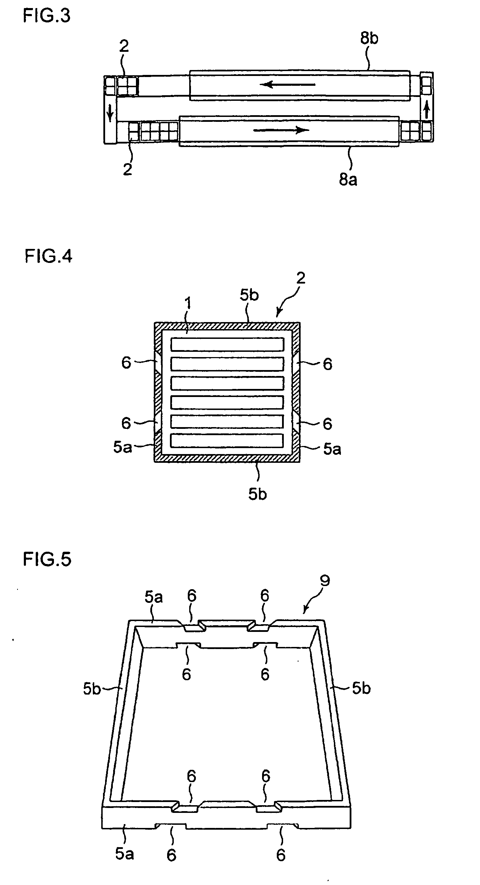

Fig. 3 is a schematic plan view from the top of an embodiment of a structure of the firing furnace used in a firing method of the present invention. In the case of firing ceramic products, as shown in Fig. 3, it is general that the calcination step for removing the organic matter such as a binder and the main firing step for sintering the substrate are often performed continuously. In a conventional firing method, in a sagger 2 conveyance process continuing from the organic matter-firing furnace 8a to the substrate-firing furnace 8b, the member such as a lid or an enclosure disposed for the purpose of covering the grooves 6 fell over the formed articles 1 to cause a problem of a defect in the final product. According to a firing method of the present invention, such a problem is not caused, and the calcination and the main firing can be performed in the continuous steps.

The disposition of the saggers 2 in such a manner that the groove-formed frame plates 5a are in parallel with the width direction of the firing furnace 8 as shown in Fig. 1A can deal with both the calcination and the main firing. For example, in the case that the organic matter decomposition performance upon calcination is tried to be improved such as the case of firing large-sized formed articles 1, increasing the load capacity of the formed articles 1, or shortening the organic matter decomposition time, as shown in Fig. 1B, it is preferable to dispose saggers 2 in such a manner that the groove-formed frame plates 5a are perpendicular to the width direction of the firing furnace only upon calcination. Incidentally, Fig. 1B is a schematic plan view from the top of an embodiment of disposition of staggers used in a firing method of the present invention upon calcining. By such disposition of the saggers 2, ventilation in the saggers 2 is further improved, and the decomposition of organic matter such as a binder can be accelerated. In addition, at this time, as the method for conveying the refractory containers carrying the saggers 2, there may be employed a conveyance method where the direction of the refractory containers is rotated by 90 degrees between the calcination and the main firing.

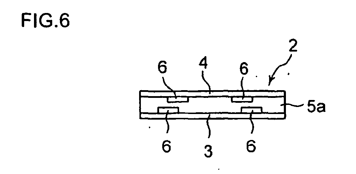

Fig. 4 is a schematic plan view from the top of the appearance that formed articles are disposed in one embodiment of a sagger used in a firing method of the present invention, Fig. 5 is a schematic perspective view from the oblique top of an embodiment of a frame member of a sagger used in a firing method of the present invention, and Fig. 6 is a schematic plan view from a side face where grooves are formed.

The sagger 2 used in a firing method of the present invention has at least a frame member 9 constituting the side faces and, as shown in Fig. 6, may further have a floor plate 3 constituting the bottom face and a lid plate 4 constituting the ceiling face. In a pair of facing frame plates 5, as shown in Figs. 4 and 5, the grooves 6 are formed to constitute groove-formed frame plates 5a. That is, the grooves 6 are formed only in the frame plates on a pair of facing two faces among the frame plates on the four faces. In addition, no groove 6 is formed in the other two frame plates 5 to constitute sealing frame plates 5b. Here, in the frame member 9, the frame plates 5 constituting the four side faces of the sagger 2 are unitarily formed. In addition, the floor plate 3 may be formed unitarily with the frame member 9 according to the convenience for use and production or may have a structure where the floor plate 3 is detachable from the frame member 9. The lid plate 4 is preferably detachable from the frame member 9.

A plurality of formed articles 1 are disposed in the sagger 2 at a regular interval. At this time, the formed articles 1 are preferably positioned and disposed in such a manner that the longitudinal direction of the formed articles 1 coincides with the direction where the groove-formed frame plates 5a face each other. By disposing the formed articles 1 in the same direction as the groove formation direction as described above, the atmosphere around each of the formed articles 1 becomes uniform, variance in porosity depending on each formed article 1 is decreased, the quality is stabilized, and the production yield is improved. Incidentally, the "longitudinal direction of the formed articles 1" in the present invention means the direction where the formed articles 1 as the target article to be fired have the longest size. In particular, when the formed article 1 has a honeycomb structure, the direction means the cell extension direction in the honeycomb structure.

Though the number of the formed articles 1 capable of being disposed in the sagger 2 depends on the size and shape of the formed articles 1, in the firing method of the present invention, since it is not necessary to provide a lid, an enclosure, or the like inside the sagger 2 unlike a conventional firing method, the number of the formed articles 1 capable of being disposed increases, and thereby the production efficiency can considerably be improved in comparison with a conventional method.

There is no particular limitation on the positions for forming the grooves 6 in the frame plate 5 as long as the structure allowing gas to uniformly circulate in the sagger 2 is employed. For example, as shown in Figs. 5 and 6, formation of the grooves 6 in the upper end portion and the lower end portion of each frame plate 5 by arranging notches bilaterally symmetrically can realize a uniform gas flow in the sagger 2, which is preferable. In the present invention, the "upper end portion of the frame plate 5" means the end portion on the side where the frame plate 5 is brought into contact with the lid plate 4, and the "lower end portion of the frame plate 5" means the end portion on the side where the frame plate 5 is brought into contact with the floor plate 3.

There is no particular limitation on the shape of the grooves 6 as long as the structure allowing gas to uniformly circulate in the sagger 2 is employed like the positions for forming the grooves 6. As shown in Fig. 4, it is preferable that the grooves are formed in such a manner that the distance between a pair of grooves in each of the upper end portion and the lower end portion of the frame plate 5 increases from the inside toward the outside of the frame plate because gas can circulate more easily.

In addition, the open ratio of the sagger 2, which is a proportion of an open area of the grooves 6 in the inner surface area of the frame member 9, is preferably 1 to 15%, more preferably 2 to 6%, particularly preferably 2 to 4%. When the open ratio of the sagger 2 is above 15%, it is not preferable because the formed articles 1 inside the sagger is prone to be influenced by the change of the atmosphere. When it is below 1%, it is not preferable because ventilation inside the sagger upon calcination is hindered. The open ratio of the sagger 2 in the aforementioned range is preferable because ventilation inside the sagger upon calcination is not hindered to realize good binder removability and because the influence of oxygen in the furnace inside the sagger can be suppressed in the main firing.

There is no particular limitation on the shape and size of Si-bonded SiC ceramics obtained by a firing method of the present invention, and various ceramics can be manufactured in accordance with the use and the like. For example, in the case of using the ceramics as a filter for trapping particulate matter in exhaust gas from an internal combustion engine, a boiler, etc., a catalyst carrier for an exhaust gas purification catalyst, or the like; a structure having a honeycomb shape (honeycomb structure), which is a general shape for such uses, is preferable.

In addition, it is preferable that the Si-bonded SiC ceramics obtained by a firing method of the present invention is, in particular, a plugged honeycomb structure where adjacent cells are plugged in mutually opposite end portions, that is, a plugged honeycomb structure where plugging was performed in such a manner that both the end faces of the honeycomb structure show a checkerwise pattern. Generally, in the case of firing a honeycomb structure having plugging portions as described above, ventilation inside and outside the cells of the honeycomb structure is suppressed by the influence of the plugging portions to have a tendency of deteriorating binder removability upon calcination. However, by employing a firing method of the present invention, good ventilation inside the sagger is maintained to exhibit good binder removability. That is, in firing a plugged honeycomb structure, it is possible to carry out the present invention more effectively.

In addition, in order to exhibit the effect of a firing method of the present invention at a maximum, as shown in Fig. 4, it is preferable that the honeycomb structure to be fired is long enough to extend from the vicinity of one groove-formed frame plate 5a having grooves 6 formed therein to the facing groove-formed frame plate 5a and that a plurality of honeycomb structures are disposed in parallel with one another in such a manner that the cell extension direction coincides with the direction where the groove-formed frame plates 5a face each other.

There is no particular limitation on the form of the furnace used for the calcination and the main firing. However, the present invention is particularly effective in the case of performing the calcination and the main firing by the use of a continuous tunnel furnace having a controlled temperature distribution in the furnace. Generally, a continuous furnace is constituted of three zones of a preheating zone, a firing zone, and a cooling zone, and temperature in each of the zones is controlled so that the temperature reaches the maximum temperature in the firing zone. The obj ects to be fired (articles) loaded on the refractory containers are introduced into the furnace at a fixed rate from the inlet port, pass through the tunnel space, and are discharged from the outlet port to complete the firing step.

When the main firing is performed in an inert atmosphere having rare oxygen such as an Ar atmosphere, SiO and alkali components are evaporated and scatter from the formed articles 1, and the SiO and alkali components scattering outside the saggers 2 aggregate as a glass phase in a low-temperature portion in the furnace to cause a problem of increasing the mending frequency of a refractory brick constituting the inner wall of the furnace. In particular, in a continuous furnace, the temperature distribution in the furnace is fixed and the position of the low temperature portion is fixed. Therefore, the SiO and alkali components scattering outside the saggers 2 aggregate selectively in the low temperature portion to deposit locally on a refractory brick. In a firing method of the present invention, since the groove-formed frame plates 5a face mutually adjacent saggers 2 lest the open portions of the saggers 2 should face the inner wall, scattering of SiO and alkali components outside the saggers 2 is inhibited to reduce a mending frequency of the furnace.

### Example

Hereinbelow, the present invention will be described in more detail on the basis of Examples. However, the present invention is by no means limited to these Examples.

### (Example 1)

To 20 parts by mass of a metal silicon powder having an average particle diameter of 5 µm were added 80 parts by mass of a silicon carbide powder having an average particle diameter of 40 µm, 1 parts by mass of strontium carbonate as superaddition, 5 parts by mass of methyl cellulose as the organic binder, 5 parts by mass of foaming resin as the pore former, and a suitable amount of water, followed by kneading to obtain kneaded clay for forming. The kneaded clay was subjected to extrusion forming into a honeycomb shape having a cell density of 300 cells/sq.in. (about 46.5 cells/cm²) and partition wall thickness of 12 mil (about 305 µm) by an extruder and then dried by a drying method where hot air drying and microwave drying are combined to obtain a honeycomb shaped formed article having an outer diameter of 40 mm and a length of 300 mm. Seven formed articles obtained above were disposed in a sagger having a frame member having grooves in only a pair of frame plates facing each other and an inner surface area of 650 cm² in such a manner that the longitudinal direction of the formed articles coincides with the direction where the groove-formed frame plates face each other. At this time, the formed article-loading ratio was 50%, and the open ratio of the saggers was 11%. Upon the calcination and the main firing, no lid or the like for covering the open portions of the grooves was disposed. Ten saggers having the formed articles disposed therein were superimposed on the refractory container and carried into the furnace at a fixed rate in such a manner that the open portions of the grooves face the depth direction of the tunnel furnace, followed by the calcination and the main firing to obtain Si-bonded SiC ceramics (porous honeycomb structures). At this time, the wind speed in the furnace was 1.5 m/sec. Incidentally, as the conditions other than those shown in Table 1, the calcination was performed by heating for eight hours so that the maximum temperature in the furnace became 450°C, and the main firing was performed by heating for 15 hours in an Ar atmosphere under ordinary pressure so that the maximum temperature in the furnace became 430°C.

### (Example 2, Comparative Examples 1 to 5)

Si-bonded SiC ceramics of Example 2 and Comparative Examples 1 to 5 were obtained in the same manner as in Example 1 except that the firing conditions were as in Table 1.

### (Evaluation)

Regarding the aforementioned Examples 1 and 2 and Comparative Examples 1 to 5, after the main firing, binder removability upon the calcination, influence of oxygen in the furnace upon the main firing, and the like were investigated, and the results are shown in Table 1. Here, the binder removability upon the calcination was judged by checking the presence/absence of change in color due to the remaining carbon and the degree of heat generation of the products. That is, in the case that no change in color was found and that the heat generation peak of the products was higher by 50°C or more than the atmospheric temperature around the outer periphery of the products as a result of temperature measurement, it was assumed that the binder removability was good. On the other hand, in the case that any change in color was found and that the heat generation peak of the products was higher by 0°C or more and below 50°C than the atmospheric temperature around the outer periphery of the products, it was assumed that the binder removability was not sufficient. In addition, the influence of oxygen in the furnace upon the main firing was judged by checking the presence/absence of change in color due to a minute amount of oxygen in the furnace. When no change in color by oxidation was found in products, it was assumed that there was no influence of oxygen in the furnace, and, when any change in color by oxidation was found in products, it was assumed that there was an influence of oxygen in the furnace.

Incidentally, among the firing conditions shown in Table 1, the "formed article-loading ratio" is a value of the ratio of the volume of the articles to be fired (formed articles) in the sagger capacity, and the "sagger open ratio" is a value of the ratio of the groove open area in the inner surface area of the frame member of the sagger. Here, the inner surface area of the frame member means the inner surface area of the frame member in the state where no groove is formed. Since the saggers having the same size were used in all of the Examples and the Comparative Examples, the "formed article-loading ratio" and the "sagger open ratio" directly depend on the "formed article-loading amount" and the "groove open area", respectively. In addition, the "wind speed" means a set value of the circulated wind speed in the furnace of the calcination furnace. As the lid for covering the groove open portions used in Comparative Examples, a ceramic worked article was employed.

**Table 1**

| | Firing condition | | | | | Evaluation result | | |
|---|---|---|---|---|---|---|---|---|
| | Formed article-loading ratio | Sagger open ratio | Groove open direction | Groove lid | Wind speed [m/sec] | Binder removability (calcination) | Influence of oxygen in furnace (main firing) | other performance |
| Example 1 | 50% | 11% | Depth direction of furnace | None | 1.5 | OK | None | - |
| Example 2 | 50% | 2% | Depth direction of furnace | None | 1.5 | OK | None | - |
| Comp. Ex. 1 | 40% | 11% | All direction | Present | 1.5 | OK | None | - |
| Comp. Ex. 2 | 50% | 11% | All direction | Present | 1.5 | NG | None | - |
| Comp. Ex. 3 | 50% | 11% | All direction | None | 1.5 | OK | Present | - |
| Comp. Ex. 4 | 50% | 11% | Width direction of furnace | None | 1.5 | OK | Present | - |
| Comp. Ex. 5 | 40% | 11% | All direction | Present | 1.6 | OK | None | Damaged |

Regarding the firing method of Examples 1 and 2, where the saggers each having grooves in only a pair of facing frame plates were disposed in such a manner that the groove open portions faced the depth direction of the tunnel furnace as shown in Table 1, good results were shown in both the calcination and the main firing even without using a lid member at the sides of the grooves in order to control ventilation. On the other hand, it was found out from the results of Comparative Examples 2 to 4 that, at least in the case that open portions of grooves face the width direction of the tunnel furnace, the products are influenced by oxygen in the furnace upon the main firing if no lid member is disposed. In addition, from the results of Comparative Examples 1 and 2, it was found out that, in the case that lid members are disposed at the sides of the groove in order to control ventilation, the formed article-loading ratio has to be suppressed to be low in order to obtain good final products. Further, from the results of Comparative Examples 1 and 5, it was found out that, with even a little increase of the wind speed in the furnace, the lid member falls over the formed articles, or damages may be caused in the formed articles by the vibration of the sagger.

The present invention can suitably be used as a f iring method which enhances production efficiency, yield, and the like in comparison with conventional methods in firing of a Si-bonded SiC ceramics suitable for a catalyst carrier in an internal combustion engine, a boiler, or the like or for a honeycomb structure used as a filter for trapping particulate matter in exhaust gas.

## Claims

1. A method for firing Si-bonded SiC ceramics comprising the steps of:
forming kneaded clay obtained by adding a silicon carbide powder to a raw material containing metal silicon and an organic binder into a predetermined shape to obtain formed articles (1),
disposing the formed articles (1) in a sagger (2) having grooves (6) formed therein,
introducing a plurality of refractory containers each carrying a plurality of saggers (2) into a firing furnace (8) in a state that the refractory containers are arranged in parallel with one another,
calcining the formed articles (1) to remove organic matter in the formed articles (1), and
subjecting the formed articles (1) to main firing in an inert gas atmosphere;
wherein the grooves (6) are formed only in a pair of frame plates (5a) facing each other and constituting side faces of each of the saggers (2),
the saggers (2) are disposed so that a groove-formed frame plate (5a) having the grooves (6) of each sagger (2) faces the groove-formed frame plate (5a) of the sagger (2) adjacent in a depth direction of the firing furnace (8) with each of the groove-formed frame plate (5a) being in parallel with a width direction of the firing furnace (8) in at least the main firing of the calcination and the main firing, and
the refractory containers carrying the saggers (2) are introduced in the firing furnace (8) to perform firing in the state that the refractory containers are arranged in parallel with maintaining an interval enough to avoid contact.

2. The method for firing Si-bonded SiC ceramics according to Claim 1, wherein the inert gas atmosphere is an Ar atmosphere.

3. The method for firing Si-bonded SiC ceramics according to Claim 1 or 2, wherein the formed articles (1) are disposed by being positioned so that the direction where the groove-formed frame plates (5a) face each other coincides with the longitudinal direction of the formed articles (1).

4. The method for firing Si-bonded SiC ceramics according to any one of Claims 1 to 3, wherein the groove (6) is formed in an upper end portion and a lower end portion of the frame plate (5a) by providing notches bilaterally symmetrically.

5. A method for firing a Si-bonded SiC ceramics according to Claim 4, wherein a pair of the grooves (6) formed in each the upper end portion and the lower end portion of the frame plate (5a) are formed so that the distance between the grooves (6) increases from the inside toward the outside of the frame plate (5a).

6. The method for firing Si-bonded SiC ceramics according to any one of Claims 1 to 5, wherein an open ratio of the sagger (2), which is a proportion of an open area of the grooves (6) in the inner surface area of the frame member (9) composed of the frame plates (5) having four faces and constituting whole side faces of the sagger (2), is 1 to 15%.

7. The method for firing Si-bonded SiC ceramics according to any one of Claims 1 to 6, wherein, in the calcination, the saggers (2) are disposed so that a sealing frame plate (5b), which is the frame plate (5) having no groove formed therein, of each of the saggers (2) faces the sealing frame plate (5b) of the sagger (2) adjacent in the depth direction of the firing furnace (8) and that the groove-formed frame plates (5a) of each of the saggers (2) are perpendicular to the width direction of the firing furnace (8), and the refractory containers each carrying the saggers (2) are introduced in the firing furnace (8) to perform forming in the state that the refractory containers are arranged in parallel with maintaining an interval enough to avoid contact.

8. The method for firing Si-bonded SiC ceramics according to any one of Claims 1 to 7, wherein the Si-bonded SiC ceramics are honeycomb structures.

9. The method for firing Si-bonded SiC ceramics according to any one of Claims 1 to 8, wherein the Si-bonded SiC ceramics are plugged honeycomb structures where adjacent cells are plugged in mutually opposite end portions.

10. The method for firing Si-bonded SiC ceramics according to any one of Claims 1 to 9, wherein the calcination and the main firing are performed by the use of a continuous tunnel furnace whose internal temperature distribution is controlled.

## Patentansprüche

1. Verfahren zum Brennen Si-gebundener SiC-Keramikmaterialien, das folgende Schritte umfasst:
das Formen von geknetetem Ton, der durch das Zusetzen eines Siliciumcarbidpulvers zu einem Ausgangsmaterial, das Metallsilicium und ein organisches Bindemittel umfasst, erhalten wird, in eine vorbestimmte Form, um Formgegenstände (1) zu erhalten,
das Anordnen der Formgegenstände (1) in einer Brennkapsel (2) mit darin ausgebildeten Vertiefungen (6),
das Einbringen einer Vielzahl feuerfester Behälter, die jeweils eine Vielzahl an Brennkapseln (2) enthalten, in einen Brennofen (8) so, dass die feuerfesten Behälter parallel zueinander angeordnet sind,
das Kalzinieren der Formgegenstände (1) zur Entfernung organischer Substanzen in den Formgegenständen (1) und
das Aussetzen der Formgegenstände (1) gegenüber einem Hauptbrennvorgang in einer inerten Gasatmosphäre;
wobei die Vertiefungen (6) nur in einem Paar einander zugewandter Rahmenplatten (5a) ausgebildet sind, die die Seitenflächen der Brennkapseln (2) bilden,
wobei die Brennkapseln (2) so angeordnet werden, dass eine Rahmenplatte (5a) mit darin ausgebildeten Vertiefungen, die die Vertiefungen (6) jeder Brennkapsel (2) aufweist, der Rahmenplatte (5a) mit darin ausgebildeten Vertiefungen der Brennkapsel (2) zugewandt ist, die in der Tiefenrichtung des Brennofens (8) benachbart in Bezug auf diese angeordnet ist, wobei jede der Rahmenplatten (5a) mit darin ausgebildeten Vertiefungen zumindest während des Hauptbrennens des Kalzinierens und des Hauptbrennens parallel zu der Breitenrichtung des Brennofens (8) vorliegt, und
wobei die feuerfesten Behälter, die die Brennkapseln (2) enthalten, in den Brennofen (8) eingebracht werden, um das Brennen in einem Zustand durchzuführen, in dem die feuerfesten Behälter parallel angeordnet sind, wobei ausreichend Abstand aufrechterhalten wird, um zu verhindern, dass sie einander berühren.

2. Verfahren zum Brennen Si-gebundener SiC-Keramikmaterialien nach Anspruch 1, worin die inerte Gasatmosphäre eine Ar-Atmosphäre ist.

3. Verfahren zum Brennen Si-gebundener SiC-Keramikmaterialien nach Anspruch 1 oder 2, worin die Formgegenstände (1) angeordnet werden, indem sie so positioniert werden, dass die Richtung, in der die Rahmenplatten (5a) mit darin ausgebildeten Vertiefungen einander zugewandt sind, mit der Längsrichtung der Formgegenstände (1) übereinstimmt.

4. Verfahren zum Brennen Si-gebundener SiC-Keramikmaterialien nach einem der Ansprüche 1 bis 3, worin die Vertiefung (6) in einem oberen Endabschnitt und einem unteren Endabschnitt der Rahmenplatte (5a) ausgebildet ist, indem bilateral symmetrisch Kerben bereitgestellt werden.

5. Verfahren zum Brennen Si-gebundener SiC-Keramikmaterialien nach Anspruch 4, worin ein Paar Vertiefungen (6), die jeweils im oberen Endabschnitt und im unteren Endabschnitt der Rahmenplatte (5a) ausgebildet sind, so ausgebildet sind, dass der Abstand zwischen den Vertiefungen (6) an der Rahmenplatte (5a) von innen nach außen größer wird.

6. Verfahren zum Brennen Si-gebundener SiC-Keramikmaterialien nach einem der Ansprüche 1 bis 5, worin ein offener Flächenanteil der Brennkapseln (2), bei dem es sich um den Anteil einer offenen Fläche der Vertiefungen (6) in der Innenoberfläche des Rahmenelements (9) handelt, das aus den Rahmenplatten (5) mit vier Flächen besteht und volle Seitenflächen der Brennkapsel (2) bildet, 1 bis 15 % beträgt.

7. Verfahren zum Brennen Si-gebundener SiC-Keramikmaterialien nach einem der Ansprüche 1 bis 6, worin beim Kalzinieren die Brennkapseln (2) so angeordnet sind, dass eine verschließende Rahmenplatte (5b), bei der es sich um die Rahmenplatte (5) ohne darin ausgebildete Vertiefung handelt, jeder Brennkapsel (2) der verschließenden Rahmenplatte (5b) der in der Tiefenrichtung des Brennofens (8) benachbarten Brennkapsel (2) zugewandt ist und dass die Rahmenplatten (5a) mit darin ausgebildeten Vertiefungen jeder Brennkapsel (2) im rechten Winkel auf die Breitenrichtung des Brennofens (8) ausgerichtet sind, und die feuerfesten Behälter, die jeweils die Brennkapseln (2) tragen, in den Brennofen (8) eingebracht werden, um das Formen in einem Zustand durchzuführen, in dem die feuerfesten Behälter parallel angeordnet sind, wobei ausreichend Abstand aufrechterhalten wird, um zu verhindern, dass sie einander berühren.

8. Verfahren zum Brennen Si-gebundener SiC-Keramikmaterialien nach einem der Ansprüche 1 bis 7, worin die Si-gebundenen SiC-Keramikmaterialien Wabenstrukturen sind.

9. Verfahren zum Brennen Si-gebundener SiC-Keramikmaterialien nach einem der Ansprüche 1 bis 8, worin die Si-gebundenen SiC-Keramikmaterialien verschlossene Wabenstrukturen sind, in denen nebeneinander liegende Zellen an entgegengesetzten Endabschnitten verschlossen sind.

10. Verfahren zum Brennen Si-gebundener SiC-Keramikmaterialien nach einem der Ansprüche 1 bis 9, worin das Kalzinieren und das Hauptbrennen unter Verwendung eines durchgehenden Tunnelofens durchgeführt werden, dessen Innentemperaturverteilung gesteuert wird.

## Revendications

1. Procédé pour cuire des céramiques en SiC lié au Si, comprenant les étapes consistant à :
mettre sous une forme prédéterminée une argile malaxée obtenue par addition d'une poudre de carbure de silicium à une matière première contenant du silicium métallique et un liant organique de façon à obtenir des articles façonnés (1),
disposer les articles façonnés (1) dans une nacelle (2) ayant des rainures (6) formées dans celle-ci,
introduire une pluralité de récipients réfractaires portant chacun une pluralité de nacelles (2) dans un four de cuisson (8) dans un état où les récipients réfractaires sont agencés en parallèle les uns par rapport aux autres,
calciner les articles façonnés (1) pour éliminer les matières organiques dans les articles façonnés (1), et
soumettre les articles façonnés (1) à une cuisson principale dans une atmosphère de gaz inerte ;
dans lequel les rainures (6) sont formées uniquement dans une paire de plaques de bâti (5a) se faisant mutuellement face et constituant des faces latérales de chacune des nacelles (2),
les nacelles (2) sont disposées de façon qu'une plaque de bâti (5a), dans laquelle sont formées des rainures, ayant les rainures (6) de chaque nacelle (2) fasse face à la plaque de bâti (5a), dans laquelle sont formées des rainures, de la nacelle (2) adjacente dans la direction de la profondeur du four de cuisson (8), chacune des plaques de bâti (5a), dans laquelle sont formées des rainures, étant parallèle à la direction de la largeur du four de cuisson (8) au moins lors de la cuisson principale parmi la calcination et la cuisson principale, et
les récipients réfractaires portant les nacelles (2) sont introduits dans le four de cuisson (8) pour que soit effectuée une cuisson dans un état où les récipients réfractaires sont agencés en parallèle, avec maintien d'un intervalle suffisant pour éviter un contact.

2. Procédé pour cuire des céramiques en SiC lié au Si selon la revendication 1, dans lequel l'atmosphère de gaz inerte est une atmosphère d'Ar.

3. Procédé pour cuire des céramiques en SiC lié au Si selon la revendication 1 ou 2, dans lequel les articles façonnés (1) sont disposés en étant positionnés de façon que la direction dans laquelle les plaques de bâti (5a), dans lesquelles sont formées des rainures, se font mutuellement face, coïncide avec la direction longitudinale des articles façonnés (1).

4. Procédé pour cuire des céramiques en SiC lié au Si selon l'une quelconque des revendications 1 à 3, dans lequel la rainure (6) est formée dans une partie d'extrémité supérieure et une partie d'extrémité inférieure de la plaque de bâti (5a) par réalisation d'encoches bilatérales symétriques.

5. Procédé pour cuire des céramiques en SiC lié au Si selon la revendication 4, dans lequel une paire des rainures (6) formées dans chacune parmi la partie d'extrémité supérieure et la partie d'extrémité inférieure de la plaque de bâti (5a) est formée de façon que la distance entre les rainures (6) augmente depuis l'intérieur vers l'extérieur de la plaque de bâti (5a).

6. Procédé pour cuire des céramiques en SiC lié au Si selon l'une quelconque des revendications 1 à 5, dans lequel le rapport d'ouverture de la nacelle (2), qui est la proportion de surface ouverte dans les rainures (6) dans la surface intérieure de l'élément de bâti (9) composé des plaques de bâti (5) ayant quatre faces et constituant des faces latérales complètes de la nacelle (2), est de 1 à 15 %.

7. Procédé pour cuire des céramiques en SiC lié au Si selon l'une quelconque des revendications 1 à 6, dans lequel lors de la calcination, les nacelles (2) sont disposées de façon qu'une plaque de bâti de scellement (5b), qui est une plaque de bâti (5) n'ayant pas de rainure formée dans celle-ci, de chacune des nacelles (2), fasse face à la plaque de bâti de scellement (5b) de la nacelle (2) adjacente dans la direction de la profondeur du four de cuisson (8), et que les plaques de bâti (5a), dans lesquelles sont formées des rainures, de chacune des nacelles (2), soient perpendiculaires à la direction de la largeur du four de cuisson (8), et les récipients réfractaires portant chacun les nacelles (2) sont introduits dans le four de cuisson (8) pour que soit effectué un façonnage dans un état où les récipients réfractaires sont agencés en parallèle, avec maintien d'un intervalle suffisant pour éviter un contact.

8. Procédé pour cuire des céramiques en SiC lié au Si selon l'une quelconque des revendications 1 à 7, dans lequel les céramiques en SiC lié au silicium sont des structures en nid d'abeilles.

9. Procédé pour cuire des céramiques en SiC lié au Si selon l'une quelconque des revendications 1 à 8, dans lequel les céramiques en SiC lié au Si sont des structures en nid d'abeilles bouché où des alvéoles adjacentes sont bouchées dans des parties d'extrémité mutuellement opposées.

10. Procédé pour cuire des céramiques en SiC lié au Si selon l'une quelconque des revendications 1 à 9, dans lequel la calcination et la cuisson principale sont effectuées par utilisation d'un four tunnel continu dont la distribution de température interne est régulée.
